# EUROPÄISCHE PATENTANMELDUNG

(11) **EP 1 702 857 A1**
(43) Veröffentlichungstag der Anmeldung: **20.09.2006**
(21) Anmeldenummer: 05005707.4
(22) Anmeldetag: 16.03.2005
(51) Int. Cl.: B65D 33/16, B62B 3/18

(54) **Tragegriff für Behälter**

(71) Anmelder: Schmitt, Angelika, 64560 Riedstadt (DE)
(72) Erfinder: Schmitt, Angelika, 64560 Riedstadt (DE)
(74) Vertreter: Blumbach - Zinngrebe

(57) **Zusammenfassung**

Beschrieben wird ein Tragegriff für Behälter, vornehmlich einen Einkaufssack (40), mit zwei gleichartigen Griffteilen (2, 20) und einer Befestigungsvorrichtung (32, 34, 36, 38) für den flexiblen Behälter. Um einen Behälter mit Tragegriff zu schaffen, der einen verbesserten Schutz seines Inhaltes gegen Diebstahl besitzt, ist vorgesehen, dass die formsteifen Griffteile lösbar ineinander greifende Rastelemente (3, 4; 23, 24) aufweisen.

## Beschreibung

Die Erfindung betrifft einen Tragegriff für Behälter, vornehmlich einen Einkaufssack mit zwei gleichartigen Griffteilen und einer Befestigungsvorrichtung für den flexiblen Behälter.

Üblich sind Einkaufstaschen mit zwei an die Tasche angenähten gleichartigen Tragegriffen. Zur Sicherung des Inhaltes der Einkaufstasche vor Diebstahl sind Verschlussvorrichtungen vorgesehen, die meist die Form eines Reißverschlüsses haben. Auch ein Reißverschluss kann in einem unbeobachteten Moment von Dritten wenigstens teilweise geöffnet werden.

Der Erfindung liegt daher die Aufgabe zugrunde, einen Behälter mit Tragegriff zu schaffen, der einen verbesserten Schutz seines Inhalts gegen Diebstahl besitzt.

Bei dem eingangs genannten Tragegriff ist dazu erfindungsgemäß vorgesehen, dass die formsteifen Griffteile lösbar ineinander greifende Rastelemente aufweisen. Zum Befüllen des Behälters, vornehmlich des Einkaufssackes, wird der rastende Eingriff der Rastelemente gelöst, so dass die Griffteile einzeln handhabbar sind und der Behälter offen ist. Zum Verschluss werden die Rastelemente miteinander in Eingriff gebracht, so dass die Öffnung des mit dem Tragegriff verbundenen Behälters zuverlässig verschlossen ist. Der Umstand, dass die Rastelemente an den formsteifen Griffteilen ausgebildet sind, stellt einen verbesserten Schutz des Tascheninhalts gegenüber den bekannten Ausführungsformen dar, bei denen der Verschluss an der Tasche selbst angebracht und die beiden Griffteile aus leicht biegsamen Material gefertigt sind. Solange die Rastelemente miteinander in Eingriff stehen, können die Griffteile nicht voneinander gelöst oder wegen ihrer Formsteifigkeit auch nur aufgebogen werden.

In bevorzugter Ausführungsform der Erfindung weisen die Rastelelemente an einem der Griffteile wenigstens einen einseitig vorstehenden Zapfen und die Rastelemente am anderen Griffteil wenigstens eine Aufnahme für den Zapfen auf, wobei sich weiterhin empfiehlt, dass der Zapfen einen verbreiterten Kopf hat und die Aufnahme eine Durchgangsbohrung für den Kopf sowie einen von der Durchgangsbohrung ausgehenden Schlitz aufweist derart, dass im eingerasteten Zustand der Kopf das andere Griffteil am Schlitz hintergreift, was durch Verschieben der Griffteile relativ zueinander erreicht wird. Zum Schließen der Tasche ist daher zunächst der Zapfen in die Durchgangsbohrung einzuführen und sodann in den Schlitz zu verschieben, was eine sichere Verrastung bewirkt.

Bevorzugte Ausführungsformen der Erfindung sind in den Unteransprüchen angegeben. Die Erfindung wird nachstehend anhand des in der beigefügten Zeichnung im Einzelnen dargestellten Ausführungsbeispiels erläutert. Es zeigen:

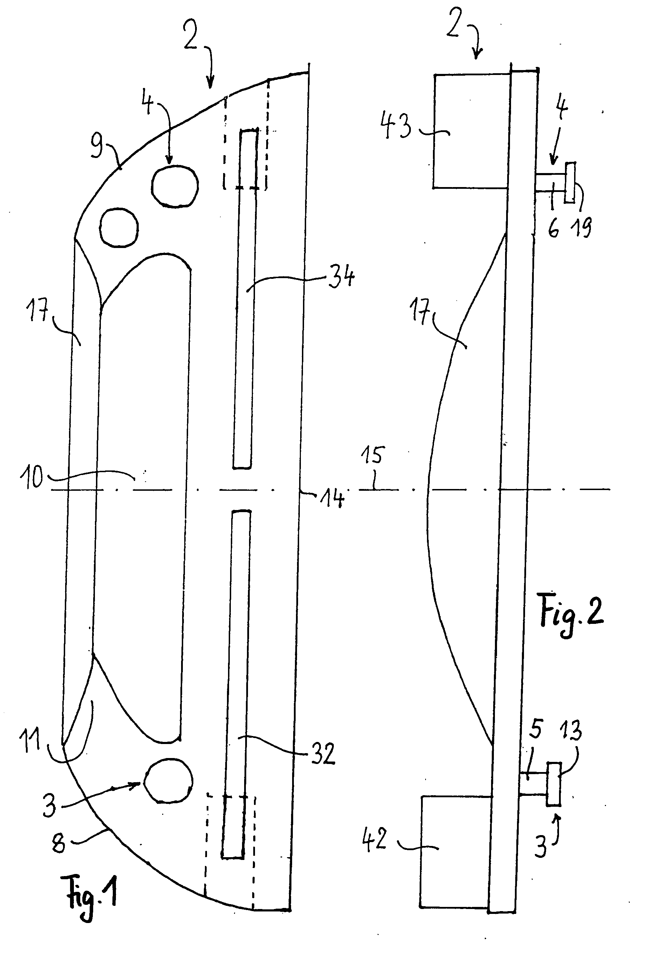

- Fig. 1: eine Ansicht der Innenseite eines ersten Griffteiles des Tragegriffs;
- Fig. 2: eine Ansicht von oben des Griffteils nach Fig. 1;
- Fig. 3: eine Ansicht der Außenseite eines zweiten Griffteiles des Tragegriffes;
- Fig. 4: eine Ansicht des Griffteiles aus Fig. 3 von oben;
- Fig. 5: eine Ansicht des ersten Griffteils aus Fig. 1 von vorne; und

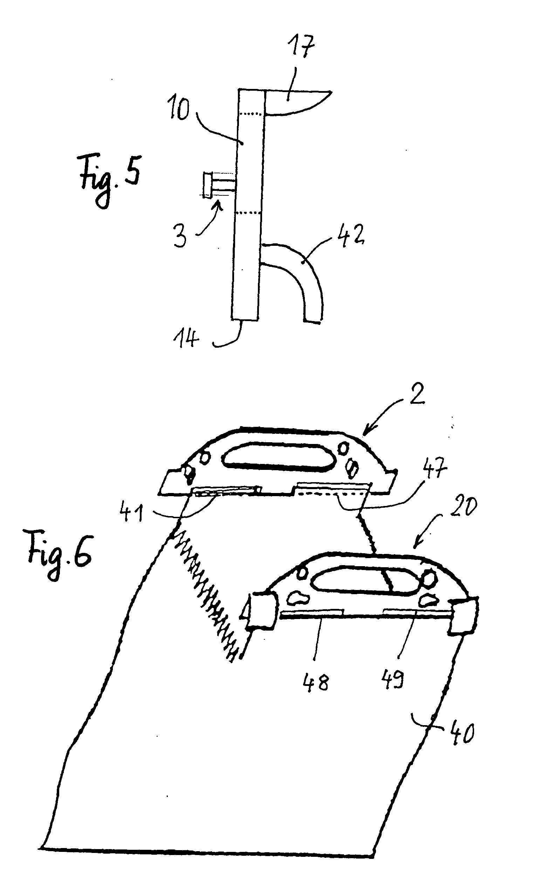

- Fig. 6: eine schematische Darstellung der Verbindung der beiden Griffteile mit einem Einkaufssack.

Das erste Griffteil 2 besteht aus einem harten, jedoch nicht spröden Kunststoff in Form einer Platte, die eine untere, geradlinige Leiste 14 aufweist. Zu beiden gegenüberliegenden Enden der Leiste 14 erhebt sich die Platte in zwei aufeinander zuweisenden Bögen 8, 9 zu einem beide Bögen 8, 9 verbindenden, sich im Wesentlichen parallel zur unteren Leiste 14 erstreckenden Steg 11. Das Griffteil 2 besitzt einen Durchgriff 10, der oben vom Steg 11, seitlich von den Bögen 8, 9 begrenzt ist und eine solche Breite aufweist, dass die Finger einer Hand etwa bis zum Daumen bequem in den Durchgriff 10 passen. An den Steg 11 ist eine sich nach außen und oben öffnende Mulde 17 angeformt, die vom oberen Rand des Durchgriff 10 ausgeht und deren glatte Außenseite eine glatte Auflage für die Finger bildet, so dass die schmale Materialstärke des Steges 11 beim Tragen eines gefüllten Einkaufssacks 40 (Fig. 5) nicht in die Hand einschneiden kann. Wie dargestellt, erstreckt sich der Durchgriff insgesamt im Wesentlichen parallel zur Leiste 14 sowie zum Steg 11.

In das Plattenstück, welches sich zwischen der unteren Begrenzung des Durchgriffs 10 und der Leiste 14 befindet, sind zwei zur Leiste 14 parallele und gegenseitig beabstandete sowie im Wesentlichen fluchtende Durchbrüche 32, 34 vorgesehen, die in noch zu erläuternder Weise zur Befestigung des Sackes 40 an dem Griffteil 2 dienen.

Beiderseits neben dem Durchgriff 10 und oberhalb der Durchbrüche 32, 34 stehen aus dem plattenförmigen Griffteil 2 je ein Zapfen 3, 4 vor. Jeder der Zapfen 3, 4 hat einen verbreiterten Kopf 13, 19 an seinem freien Ende. Die Länge des Schaftes 5, 6 jedes der Zapfen 3, 4 entspricht etwa der Materialstärke des zweiten Griffteils 20. Das Griffteil 2 ist bis auf die Lage der Zapfen 3, 4 im Wesentlichen symmetrisch zu einer gedachten Mittelebene 15, die sich quer zum Durchgriff 10 und zur Leiste 14 erstreckt.

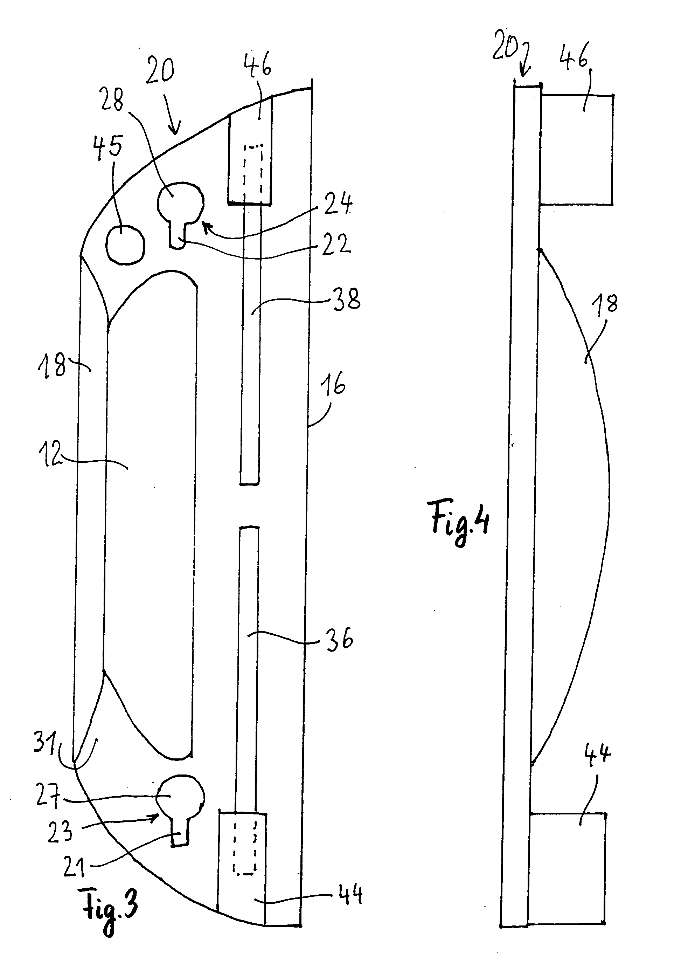

Das zweite Griffteil 20 besteht aus gleichem Werkstoff wie das erste Griffteil 2 und gleicht in seiner äußeren Kontur letzterem. So weist das zweite Griffteil eine geradlinige untere Leiste 16 und einen Durchgriff 12 auf, dessen Öffnung dem Durchgriff 10 gleicht. Entsprechend wie bei dem ersten Griffteil 2 ist an dem den Durchgriff 12 oben begrenzenden Steg 31 eine Fingermulde 18 ausgebildet, die nach außen und oben gewölbt ist und wie die Fingermulde 17 von dem oberen Rand des Durchgriffs 12 ausgeht und eine flächige Auflage für die die Durchgriffe 10 und 12 durchgreifende Hand bildet. Ferner sind den Durchbrüchen 32 und 34 entsprechende gleich gelagerte Durchbrüche 36 und 38 in der Nähe der Leiste 16 ausgebildet, die gleiche Lage und gleiche Gestalt wie die Durchbrüche 32, 34 besitzen. Das zweite Griffteil besitzt zwei Aufnahmen 23, 24 für die beiden Zapfen 3, 4 des ersten Griffteils 2. Im dargestellten Ausführungsbeispiel besteht die Aufnahme 23 aus einer Durchgangsbohrung 27, in welche sich bei Betrachtung der Fig. 3 von unten ein Schlitz 21 öffnet. Die lichte Weite der Durchgangsbohrung 27 ist so bemessen, dass der Kopf 13 des Zapfens 3 durch die Öffnung 27 glatt hindurch passt. Die lichte Weite des Schlitzes 21 hat eine lichte Weite, die dem Außendurchmesser des Schaftes 5 des Zapfens 3 entspricht. In ähnlicher Weise besitzt die Aufnahme 24 eine Durchgangsbohrung 28, durch welche der Kopf 19 passt und in welche von unten (Fig. 3), also von der gleichen Seite wie der Schlitz 21, sich ein Schlitz 22 öffnet, dessen lichte Weite dem Außendurchmesser des Schaftes 6 des Zapfens 4 entspricht.

Das Griffteil 2 kann daher mit dem Griffteil 20 in der Weise einrastend verbunden werden, dass beide Griffteile 2, 20 mit den Fingermulden 17, 18 nach außen weisend nebeneinander gelegt werden, wobei der Zapfen 3 mit Kopf 13 die Bohrung 27 und der Zapfen 4 mit Kopf 19 die Bohrung 28 durchdringt. Sodann wird das zweite Griffteil 20 relativ zum ersten Griffteil 2 nach oben in der praktischen Benutzung der Griffteile jedoch in Richtung der Schlitze 21, 22 verschoben, so dass die Schäfte 5, 6 der Zapfen 3 und 4 in die Schlitze 21, 22 gelangen und die Köpfe 13, 19 das Griffteil 20 einrastend hintergreifen. Die Anordnung der Zapfen 3, 4 auf dem Griffteil 2 sowie der Aufnahme 23 und 24 auf dem Griffteil 20 ist so getroffen, dass nach einrastendem Hintergriff der Köpfe 13, 19 hinter das zweite Griffteil 20 der Rand des ersten Griffteils 2 genau auf dem Rand des zweiten Griffteils 20 liegt und daher beide Griffteile 2, 20 einen einheitlichen Tragegriff mit einheitlichem Zugriff 10, 12 bilden.

Wenn der Sack 40 aus flexiblem Material, beispielsweise Stoff besteht, ist dieser so zugeschnitten, dass an gegenüberliegenden Oberkanten des Sackes 40 Stoffstege 41, 47, 48, 49 vorstehen, die beziehentlich durch die Durchbrüche 32, 34 und 36, 38 hindurch gesteckt werden und mit dem Sack vernäht werden können. Damit ist der Sack einerseits am ersten Griffteil 2 über die Stoffstege 41, 47 und andererseits am zweiten Griffteil 20 über die Stoffstege 48, 49 dauerhaft befestigt, so dass der Sack 40 zum Befüllen nach Belieben geöffnet und danach wieder in der beschriebenen Weise durch einrastenden Eingriff des ersten Griffteiles 2 im zweiten Griffteil 20 geschlossen werden kann.

Am ersten Griffteil 2 ist in den Eckbereichen der Bögen 8, 9 mit der Leiste 14 je ein nach außen und unten gebogener Haken 42, 43 angeformt, wobei das zweite Griffteil an den entsprechenden Eckbereichen ebenfalls nach außen und unten gebogene Haken 44, 46 besitzt. Mittels dieser Haken 42 oder 44, 46 kann der Tragegriff an einer wählbaren seiner Außenseiten über Stangen oder ähnliche Vorrichtungen, beispielsweise an einem Einkaufswagen oder im Hausbereich, eingehängt werden.

In dem Material des ersten Griffteils 2 oder des zweiten Griffteils 20 ist außen eine kreisförmige Einsenkung 45 vorgesehen, die zur klemmenden Aufnahme eines Jetons, wie er beispielsweise zur Benutzung von Einkaufswagen erforderlich ist, dient. Der Jeton ist daher vor Verlust bei Nichtbenutzung eines Einkaufswagens geschützt.

## Patentansprüche

1. Tragegriff für Behälter, vornehmlich einen Einkaufssack (40), mit zwei gleichartigen Griffteilen (2, 20) und einer Befestigungsvorrichtung (32, 34, 36, 38) für den flexiblen Behälter, **dadurch gekennzeichnet, dass** die formsteifen Griffteile lösbar ineinander greifende Rastelemente (3, 4; 23, 24) aufweisen.

2. Griff nach Anspruch 1, **dadurch gekennzeichnet, dass** die Rastelemente an einem der Griffteile (2) wenigstens einen nach innen vorstehenden Zapfen (3, 4) und die Rastelemente am anderen Griffteil (20) wenigstens eine Aufnahme (23, 24) für den Zapfen aufweisen.

3. Griff nach Anspruch 1 oder 2, **dadurch gekennzeichnet, dass** der Zapfen einen verbreiterten Kopf (13, 19) besitzt und die Aufnahme eine Durchgangsbohrung (27, 28) für den Kopf sowie einen von der Durchgangsbohrung ausgehenden Schlitz (21, 22) aufweist derart, dass im eingerasteten Zustand der Kopf das andere Griffteil am Schlitz hintergreift.

4. Griff nach einem der vorstehenden Ansprüche, **dadurch gekennzeichnet, dass** beide Griffteile je einen Durchgriff (10, 12) für die Hand aufweisen, wobei beide Durchgriffe (10, 12) gleich groß sind.

5. Griff nach einem der vorstehenden Ansprüche, **dadurch gekennzeichnet, dass** eines der Griffteile (2) beiderseits des Durchgriffs (10) je einen Zapfen (3, 4) aufweist und das anderen Griffteil (20) beiderseits des Durchgriffs (12) je eine Durchgangsbohrung (27, 28) besitzt, wobei die Schlitze (21, 22) bezüglich der Durchgangsbohrungen in die gleiche Richtung weisen.

6. Griff nach einem der vorstehenden Ansprüche, **dadurch gekennzeichnet, dass** die Griffteile eine im Wesentlichen geradlinige untere Leiste (14, 16) besitzen und sich die Durchgriffe (10, 12) im Wesentlichen parallel zu den Leisten erstrecken.

7. Griff nach einem der vorstehenden Ansprüche, **dadurch gekennzeichnet, dass** die Griffteile (2, 20) bis auf die Rastelemente zu einer gedachten Ebene (15) symmetrisch sind, die die Leisten (14, 16) und die Durchgriffe (10, 12) schneidet.

8. Griff nach einem der vorstehenden Ansprüche, **dadurch gekennzeichnet, dass** die Griffteile längs der die Durchgriffe (10, 12) oben begrenzenden Stege (11, 31) nach außen weisende und nach oben gebogene Griffmulden (17, 18) aufweisen.

9. Griff nach einem der vorstehenden Ansprüche, **dadurch gekennzeichnet, dass** die Befestigungsvorrichtung zwischen den Unterkanten der Durchgriffe (10, 12) und den Leisten (14, 16) wenigstens einen Durchbruch (32, 34; 36, 38) zur Durchführung und Verankerung von Behälterteilen aufweist.

10. Griff nach einem der vorstehenden Ansprüche, **dadurch gekennzeichnet, dass** die Griffteile an ihren unteren Enden auswärts weisende Einhängehaken (46, 47, 48) besitzen.

11. Griff nach einem der vorstehenden Ansprüche, **dadurch gekennzeichnet, dass** die Griffteile aus formsteifen, flachem Kunststoff bestehen.
